# EUROPEAN PATENT APPLICATION

(11) **EP 2 624 529 A1**
(43) Date of publication of application: **07.08.2013**
(21) Application number: 11828001.5
(22) Date of filing: 01.07.2011
(51) Int. Cl.: H04M 1/247

(54) **PAGE FLIP AND OPERATION METHOD THEREOF FOR READING MMS ON MOBILE PHONES**

(30) Priority: 29.09.2010 CN 201010503398
(71) Applicant: Huizhou TCL Mobile Communication Co., Ltd., Huizhou, Guangdong 516006 (CN)
(72) Inventor: LIU, Ke, Huizhou, Guangdong 516006 (CN); YANG, Jinhua, Huizhou, Guangdong 516006 (CN)
(74) Representative: Isarpatent
(86) International application number: PCT/CN2011/076752
(87) International publication number: WO 2012/041105

(57) **Abstract**

A page-turning method for reading an MMS message in a mobile phone is disclosed herein, and comprising steps: A. enter the MMS message and turn to a first page; B. detect an operating command to determine an operating type, enter step C if it is a page-turning operation, enter step D if it is a page designating operation; C. execute the corresponding operating command to turn to a next or previous page according to the page-turning operation; and D. execute the corresponding operating command to turn the MMS message to a designated page according to the page designating operation. The method described above can help the user determine the type of the page-turning operation and provides two page-turning operations (a page-turning operation and a page designating operation), so the user can turn the MMS message arbitrarily to the page, and thereby conveniently enter to read the MMS message.

## Description

### FIELD OF THE INVENTION

The present invention relates to a field of message processing technology, and more particularly relates to a page-turning and operating method for reading multimedia messaging service message in a mobile phone.

### BACKGROUND OF THE INVENTION

Multimedia Messaging Service is abbreviated as MMS and most significant characteristic is supporting multimedia function which can comprehensively transmit multimedia contents and information. The information includes different kinds of multimedia formats, such as words, images, voice, data, and so on. Technically, an MMS is not a type of short message service, instead, under a support of a general packet radio service (GPRS) network, information such as pictures, voice, and words, can be transmitted by a carrier with wireless application protocol (WAP). MMS activities can achieve multimedia message transmission from a mobile phone terminal to another mobile phone terminal, from a mobile phone terminal to an internet, or from an internet to a mobile phone terminal.

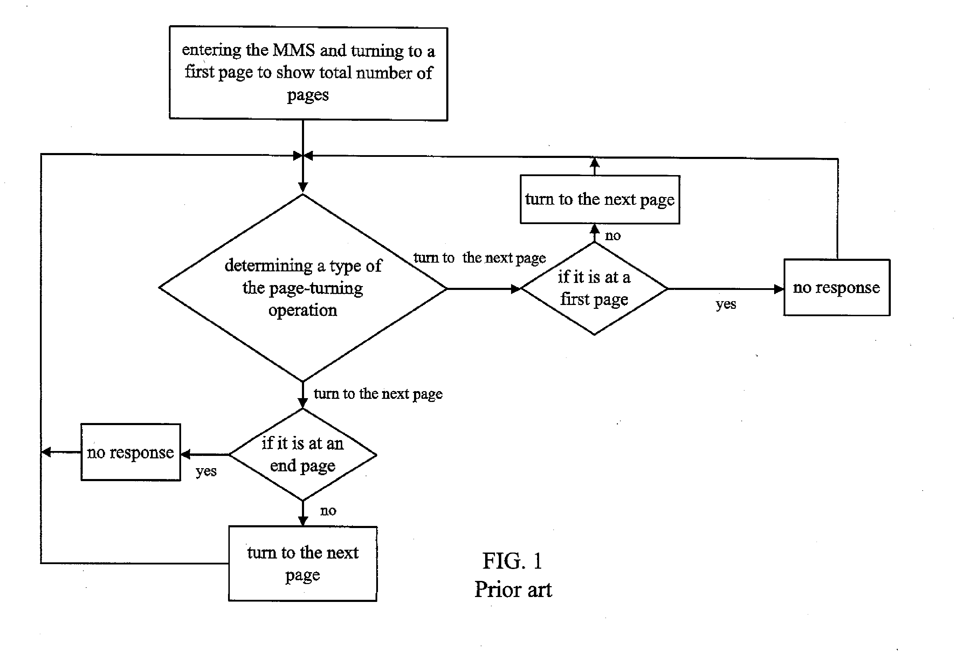

Because MMS supports multimedia function and therefore is able to transmit contents and information with comprehensive functionality, MMS becomes more and more popular with manufacturing companies and with end users. However, when an information quantity of the MMS message is increased, the maximum capacity of the information quantity is about 50K, which is approximately equal to eight beautiful pictures or twenty-five thousand Chinese characters. A large quantity of information cannot be displayed in one page of a screen of the mobile phone, and in most instances, the mobile phone is required to show more than ten to hundreds of pages. The user is usually required to perform a page-turning operation during reading the MMS message, and in the current technology, when the user is reading the MMS message with larger quantity, the mobile phone will normally prompt a notice which shows how many pages there are in the MMS message and the current reading page is in which page. As shown in FIG. 1, when the user is reading the MMS message from the mobile phone, the user will enter the MMS message also turn the MMS message to a first page, and it would immediately indicate the number of pages there are in the MMS message. When the user pushes a function key of the mobile phone to turn to the page or performs a sliding motion on a touch screen to execute a page-turning operation, the mobile phone determines the type of the page-turning operation. In a page-up operation, a currently displayed page is determined if it is at the first page of the MMS message, and do not respond to the page-up operation if it is at the first page, otherwise turn to a previous page. In a page-down operation, a currently displayed page is determined if it is at the end page of the MMS message, and do not respond to the page-down operation if it is at the end page, otherwise turn to a next page.

When a mobile phone or any other handheld portable device is used to read the MMS message, the MMS message reading is interrupted if the mobile phone receives an incoming call or is required to do other operations. Then re-reading the MMS message requires repeating page-by-page all over again, thus time and energy are wasted. As a result, it is necessary to provide a method to turn to any page arbitrarily at random for providing conveniences for the user in reading the MMS message.

### SUMMARY OF THE INVENTION

One object of the present invention is to provide a page-turning and operating method for reading a multimedia messaging service (MMS) message on a mobile phone, so the user can conveniently turn to and read any page arbitrarily on the MMS message.

A technical solution of the present invention is as follows.

A page-turning method for reading a multimedia messaging service (MMS) message in a mobile phone, and the method comprises steps of:
A. enter an MMS message and turn to a first page;
B. detect an operating command of a user and determine an operating type thereof, entering step C if it is a page-turning operation, enter step D if it is a page designating operation;
C. turn the MMS message to a previous or a next page in accordance with the command of the user if content of the command corresponds to the page-turning operation; and
D. turn the MMS message to a designated page in accordance with the command of the user if content of the command corresponds to the page designating operation.

The page-turning method for reading the MMS message in the mobile phone, wherein the step B comprises: detect the operating command of the user and determining the operating type thereof in accordance with a source, and the operating command generated by a mobile phone arrow key corresponds to the page-turning operation, and the operating command generated by a mobile phone number key corresponds to the page designating operation.

The page-turning method for reading the MMS message in the mobile phone, wherein the step B comprises: detect the operating command of the user and determining the operating type in accordance with a source, and the operating command generated by a sliding motion on a touch screen corresponds to the page-turning operation, and the operating command generated by a touching motion on the touch screen corresponds to the page designating operation.

The page-turning method for reading the MMS message in the mobile phone, wherein the step C comprises:
C1. determine a type of the page-turning operation, enter step C2 if it is a page-down operation, or enter step C3 if it is a page-up operation;
C2. determine if it is at an end page of the MMS message, return to step B directly without responding to the page-down operation if it is at the end page, or turn to a next page and returning to step B if it is not at the end page; and
C3. determine if it is at a first page of the MMS message, return to step B directly without responding to the page-up operation if it is at the first page, or turn to a previous page and returning to step B if it is not at the first page.

The page-turning method for reading the MMS message in the mobile phone, wherein in step D, the operating command which corresponds to the page designating operation includes page numbers for the designated pages, and the MMS message is turned to the designated page according to the page number.

The page-turning method for reading the MMS message in the mobile phone, wherein in step D, a key value of the number key, which generates the page designating command, is used as a page number of the designated page, and the MMS message is turned to the designated page.

The page-turning method for reading the MMS message in the mobile phone, wherein the step D specifically comprises:
D1. provide an input frame on a mobile phone screen;
D2. input a page number of the designated page within the input frame by the number key of the mobile phone; and
D3. determine if the page number of the designated page exceeds a total number of pages of the MMS message, return to step B directly without responding to the page designating operation if it exceeds the total number of pages, or turn the MMS message to the designated page and returning to step B if it does not exceed the total number of pages.

The page-turning method for reading the MMS message in the mobile phone, wherein the step D specifically comprises:
D4. provide an input frame and a virtual number keyboard on the touch screen of the mobile phone;
D5. input a page number of the designated page on the input frame by the virtual number keyboard;
D6. determine if the page number of the designated page exceeds a total number of pages of the MMS message, return to step B directly without responding to the page designating operation if it exceeds the total number of pages, or turn the MMS message to the designated page and returning to step B if it does not exceed the total number of pages.

The page-turning method for reading MMS message in the mobile phone described above can recognize the type of the user's page-turning operation and provide two types of the page-turning operation: a page-up and page-down operation and a page designating operation. The MMS message can be arbitrarily turned the page to the designated page and the user can be easy to read the MMS message.

### DESCRIPTION OF THE DRAWINGS

FIG. 1 is a flow chart illustrating a page-turning operation in reading the MMS message of a conventional mobile phone; and
FIG. 2 is a flow chart illustrating a page-turning method for reading the MMS message on a mobile phone in one preferred embodiment of the present invention.

### DETAILED DESCRIPTION OF THE PREFERRED EMBODIMENTS

In the following detailed description of the preferred embodiments, reference is made to the accompanying drawings which form a part hereof, and as shown by way of illustration specific embodiments in which the invention may be practiced. The directional terminology is used for purposes of illustration and is in no way limiting the present invention.

The size and content of a multimedia messaging service (MMS) message are stored in a mobile phone after the mobile phone receives the MMS message. A user turns a previous page or a next page of which is corresponding to a page of the content, as well display the page on a screen of the mobile phone. Accordingly, the present invention provides a page-turning method for reading the MMS message in a mobile phone, so that the user can conveniently read any page of the MMS message by only inputting a page number of a designated page on the mobile phone, and then the mobile phone will obtain the content of the corresponding page of the MMS message in accordance to the number inputted by the user.

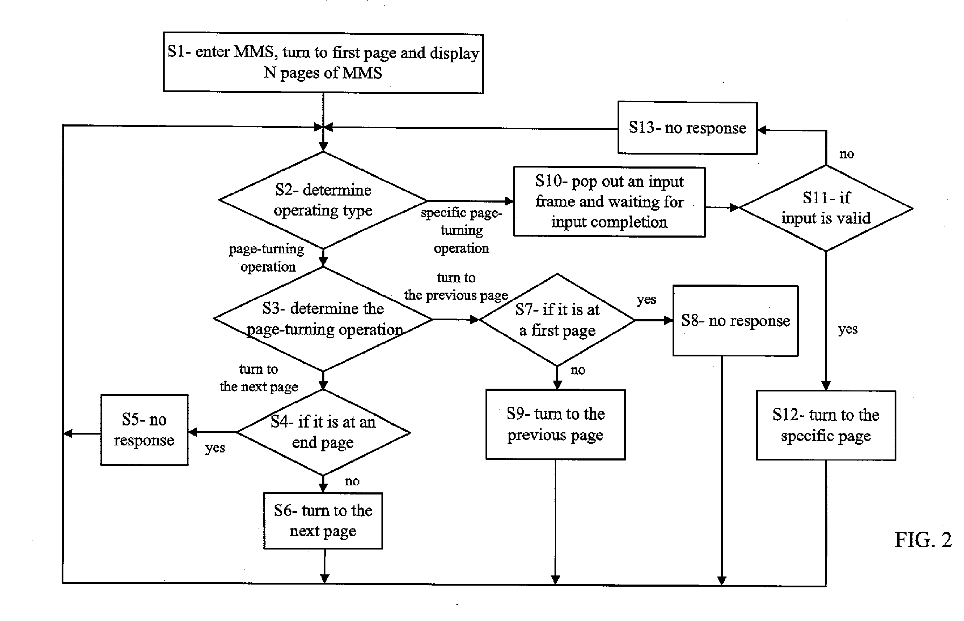

Please refer to FIG. 2, which is a flow chart illustrating the page-turning method for reading the MMS message of the mobile phone in one preferred embodiment of the present invention. The method comprises the following steps:
S1. enter the MMS message, and turn to a first page (a front page) and also a total of N pages in the MMS message is displayed, wherein N is determined by the size of the content of the MMS message detected by the mobile phone and represents a total number of pages of the MMS message that is required to be displayed on a screen of the mobile phone;
S2. detect an operating command and determine a user's operating type, enter step S3 if it is a page-turning operation, or enter step S10 if it is a page designating operation;
S3. determine the operating type of the page-turning operation, enter step S4 if it is a page-down operation, or enter step S7 if it is a page-up operation;
S4. determine if it is at an end page of the MMS message, enter step S5 if it is at the end page, enter step S6 if it is not at the end page;
S5. do not respond to the page-down operation and return to step S2 to wait for a next operation;
S6. turn the MMS message to the next page and return to step S2 to wait for the next operation;
S7. determine if it is at the first page, enter step S8 if it is at the first page, enter step S9 if it is not at the first page;
S8. do not respond for the page-up operation and return to step S2 to wait for the next operation;
S9. turn to the previous page and return to step S2 to wait for the next operation;
S10. pop out an input frame and wait for a designated page input completion;
S 11. determine if the input page is valid or not by detecting if the designated page is between the first page and the Nth page, and enter step S12 if the input page is valid, enter step S 13 if the input page is not valid;
S12. turn the MMS message to the designated page and return to S2 to wait for the next operation;
S 13. do not respond to the page designating operation and return to S2 to wait for the next operation.

In the above-mentioned step S2, the user's operating command is determined to be the page-turning operation when the user pushes an arrow key, such as "a push down button" or "a push up button", or when the user performs a slide up and down or left and right motion on a touch screen during reading the MMS message on the mobile phone, and the user's operating command is determined to be the page designating operation when the user pushes a number key of the mobile phone or does a touching motion on the touch screen. In the above-mentioned step S3, corresponding the page-down operation and the page-up operation to the push down button and the push up button pushed by the user during reading the MMS message on the mobile phone, or the slide up and down operation as well as the slide left and right operation performed by the user, for example, the slide left operation on the touch screen corresponds to the page-up operation and the slide right operation on the touch screen corresponds to the page-down operation, is well known to the person with ordinary skill in the art hence detail description thereof is omitted herein. In the above-mentioned step S10, because the number keys and the alphabet keys of the mobile phone are shared the same keys on the mobile phone, the mobile phone only accepts the number input when reading the MMS message. For example, the number 2 shares the same key with the alphabets A, B and C, and when the key of the number 2 is pushed during reading the MMS message, the mobile phone will detect the number 2 instead of the alphabets A, B or C. Because the MMS message usually includes dozens of pages, it is required to input two digits of page number. Therefore, an input frame will pop out on the screen when the user pushes the number key. The input frame is floating on the screen of the mobile phone and it won't affect reading the MMS message and easy for the user to input the number. After the user inputs the number, the user can push a confirm key to complete the number input (the page number of the designated page). For the mobile phone with the touch screen, the user can touch the touch screen to activate the input frame and a virtual number keyboard and then touch the virtual number keyboard to input the designated page on the input frame. Of course, for the MMS message with fewer pages, such as an MMS message with less than 10 pages, it is not required to input many digits and can be simplified to omit the input frame. The MMS message will turn to the designated page when a designated number key is pushed on the mobile phone.

The above-mentioned method accomplishes the arbitrary page-turning function by optimizing the user interface with software without cost increases. By comparing with a conventional method for turning pages one-by-one, time is saved and a user has a friendlier experience to read the MMS message.

As described above, the present invention has been described with preferred embodiments thereof and it is understood that many changes and modifications to the described embodiments can be carried out without departing from the scope and the spirit of the invention that is intended to be limited only by the appended claims.

## Claims

1. A page-turning method for reading a multimedia messaging service (MMS) message in a mobile phone, **characterized in that**, the method comprises steps of:
A. entering an MMS message and turning to a first page;
B. detecting an operating command of a user and determining an operating type thereof, entering step C if it is a page-turning operation, entering step D if it is a page designating operation;
C. turning the MMS message to a previous or a next page in accordance with the command of the user if content of the command corresponds to the page-turning operation; and
D. turning the MMS message to a designated page in accordance with the command of the user if content of the command corresponds to the page designating operation.

2. The page-turning method for reading the MMS message in the mobile phone according to claim 1, **characterized in that**, the step B specifically comprises:
detecting the operating command of the user and determining the operating type thereof in accordance with a source, and the operating command generated by a mobile phone arrow key corresponds to the page-turning operation, and the operating command generated by a mobile phone number key corresponds to the page designating operation.

3. The page-turning page method for reading the MMS message in the mobile phone according to claim 1, **characterized in that**, the step B specifically comprises:
detecting the operating command of the user and determining the operating type in accordance with a source, and the operating command generated by a sliding motion on a touch screen corresponds to the page-turning operation, and the operating command generated by a touching motion on the touch screen corresponds to the page designating operation.

4. The page-turning method for reading the MMS message in the mobile phone according to claims 1-3, **characterized in that**, the step C specifically comprises:
C1. determining a type of the page-turning operation, entering step C2 if it is a page-down operation, or entering step C3 if it is a page-up operation;
C2. determining if it is at an end page of the MMS message, returning to step B directly without responding to the page-down operation if it is at the end page, or turning to a next page and returning to step B if it is not at the end page; and
C3. determining if it is at a first page of the MMS message, returning to step B directly without responding to the page-up operation if it is at the first page, or turning to a previous page and returning to step B if it is not at the first page.

5. The page-turning method for reading the MMS message in the mobile phone according to any of claims 1-3, **characterized in that**, in step D, the operating command which corresponds to the page designating operation includes a page number for the designated page and the MMS message is turned to the designated page according to the page number.

6. The page-turning method for reading the MMS message in the mobile phone according to claim 2, **characterized in that**, in step D, a key value of the number key, which generates the page designating command, is used as a page number of the designated page, and the MMS message is turned to the designated page.

7. The page-turning method for reading the MMS message in the mobile phone according to claim 2, **characterized in that**, the step D specifically comprises:
D1. providing an input frame on a mobile phone screen;
D2. inputting a page number of the designated page within the input frame by the number key of the mobile phone; and
D3. determining if the page number of the designated page exceeds a total number of pages of the MMS message, returning to step B directly without responding to the page designating operation if it exceeds the total number of pages, or turning the MMS message to the designated page and returning to step B if it does not exceed the total number of pages.

8. The page-turning method for reading the MMS message in the mobile phone according to claim 3, **characterized in that**, the step D specifically comprises:
D4. providing an input frame and a virtual number keyboard on the touch screen of the mobile phone;
D5. inputting a page number of the designated page on the input frame by the virtual number keyboard;
D6. determining if the page number of the designated page exceeds a total number of pages of the MMS message, returning to step B directly without responding to the page designating operation if it exceeds the total number of pages, or turning the MMS message to the designated page and returning to step B if it does not exceed the total number of pages.

9. A page-turning method for reading multimedia messaging service (MMS) message in a mobile phone, **characterized in that**, the method comprises steps of:
A. entering an MMS message and turning to a first page; and
B. detecting an operating command of a user and determining an operating type thereof, and executing a corresponding operation in accordance with the operating type, and the operation type including a page-turning operation and a page designating operation.

10. The page-turning method for reading the MMS message in the mobile phone according to claim 9, **characterized in that**, the step of executing the corresponding operation comprises a step C of turning the MMS message to a next or previous page in accordance with the operating command of the user if content of the command corresponds to the page-turning operation when it is determined as the page-turning operation.

11. The page-turning method for reading the MMS message in the mobile phone according to claim 9, **characterized in that**, the step of executing the corresponding operation comprises a step D of turning the MMS message to a designated page in accordance with the operating command of the user if content of the command corresponds to the page designating operation when it is determined as the page designating operation.

12. The page-turning method for reading the MMS message in the mobile phone according to claim 9, **characterized in that**, the step B comprises: detecting the operating command of the user and determining an operating type in accordance with a source, and the operating command generating by a mobile phone arrow key corresponds to the page-turning operation and the operating command generating by a mobile phone number key corresponds to the page designating operation.

13. The page-turning method for reading the MMS message in the mobile phone according to claim 9, **characterized in that**, the step B specifically comprises:
detecting the operating command of the user and determining the operating type in accordance with a source, and the operating command generating by a sliding motion on a touch screen corresponds to the page-turning operation and the operating command generating by a touching motion of the touch screen corresponds to the page designating operation.

14. The page-turning method for reading the MMS message in the mobile phone according to any of claims 9 - 13, **characterized in that**, the step C specifically comprises:
C1. determining a type of the page-turning operation, entering step C2 if it is a page-down operation, or entering step C3 if it is a page-up operation;
C2. determining if it is in an end page of the MMS message, returning to step B directly without responding to the page-down operation if it is at the end of the page, or turning to a next page and return to step B if it is not at the end page; and
C3. determining if it is at a first page of the MMS message, returning to step B directly without responding to the page-up operation if it is at the first page, or turning to the previous page and return to step B if it is not at the first page.

15. The page-turning method for reading the MMS message in the mobile phone according to any claims 1-3, **characterized in that**, in step D, the operating command which corresponds to the page designating operation includes page numbers of the designated pages and the MMS message is turned to the designated page according to the page code.

16. The page-turning method for reading the MMS message in the mobile phone according to claim 2, **characterized in that**, in step D, a key value of the number key, which generates the page designating command, is used to be a page number of the designated page, and the MMS message is turned to the designated page.

17. The page-turning method for reading the MMS message in the mobile phone according to claim 2, **characterized in that**, the step D specifically comprises:
D1. providing an input frame on a mobile phone screen;
D2. inputting a page number of the designated page within the input frame by the number key of the mobile phone;
D3. determining if the page number of the designated page exceeds a total number of pages of the MMS message, returning to step B directly without responding to the page designating operation if it exceeds the total number of pages, or turning the MMS message to the designated page and returning to step B if it does not exceed the total number of pages.

18. The page-turning method for reading the MMS message in the mobile phone according to claim 3, **characterized in that**, the step D specifically comprises:
D4. providing an input frame and a virtual number keyboard on the touch screen of the mobile phone;
D5. inputting a page number of the designated page on the input frame by the virtual number keyboard;
D6. determining if the page number of the designated page exceeds a total number of pages of the MMS message, returning to step B directly without responding to the page designating operation if it exceeds the total number of pages, or turning the MMS message to the designated page and returning to step B if it does not exceed the total number of pages.
